# EUROPÄISCHE PATENTANMELDUNG

(11) **EP 4 005 894 A1**
(43) Veröffentlichungstag der Anmeldung: **01.06.2022**
(21) Anmeldenummer: 21207806.7
(22) Anmeldetag: 11.11.2021
(51) Int. Cl.: B60W 50/14, G08G 1/16, B60R 1/22

(54) **VERFAHREN ZUR DARSTELLUNG EINES VIRTUELLEN ELEMENTS**

(30) Priorität: 26.11.2020 DE 102020214843
(71) Anmelder: Volkswagen Aktiengesellschaft, 38440 Wolfsburg (DE)
(72) Erfinder: Kunze, Alexander, 13585 Berlin (DE); Schacht, Matthias, 38106 Braunschweig (DE); Seib, Eduard, 38444 Wolfsburg (DE); Sandbrink, Johanna, 38102 Braunschweig (DE)

(57) **Zusammenfassung**

Die Erfindung betrifft ein Verfahren zur Darstellung mindestens eines virtuellen Elements (10) in einem Anzeigebereich (12) mindestens einer Anzeigeeinrichtung (14) eines Fahrzeugs (16).

Bei dem Verfahren, bei dem der Anzeigebereich einer Anzeigeeinrichtung möglichst effizient genutzt wird, sodass dem Fahrer eines Fahrzeugs eine übersichtliche Darstellung der benötigten Informationen ermöglicht und er nicht unnötig abgelenkt wird, ist vorgesehen, dass durch das virtuelle Element (10) mindestens ein erstes Fahrzeug (22) markiert wird, das im Anzeigebereich (12) der Anzeigeeinrichtung (14) dargestellt wird.

## Beschreibung

Die Erfindung betrifft ein Verfahren zur Darstellung mindestens eines virtuellen Elements in einem Anzeigebereich mindestens einer Anzeigeeinrichtung eines Fahrzeugs, wobei im Anzeigebereich der Anzeigeeinrichtung ein dreidimensionaler Raum dargestellt wird, wobei auf Basis mindestens einer Datenquelle dreidimensionale Koordinaten im dargestellten dreidimensionalen Raum für die Verortung mindestens eines virtuellen Elements bestimmt werden, wobei das mindestens eine virtuelle Element als zweidimensionale Abbildung in den dreidimensionalen Raum, der im Anzeigebereich der Anzeigeeinrichtung dargestellt wird, transformiert wird und wobei durch das virtuelle Element mindestens ein erstes Fahrzeug markiert wird, das im Anzeigebereich der Anzeigeeinrichtung dargestellt wird.

Daneben betrifft die Erfindung eine Vorrichtung zur Darstellung mindestens eines virtuellen Elements, mit mindestens einer Anzeigeeinrichtung mit mindestens einem Anzeigebereich.

Außerdem betrifft die Erfindung ein Fahrzeug mit einer Vorrichtung zur Darstellung mindestens eines virtuellen Elements.

Mit der stetigen Weiterentwicklung von Virtual- und Augmented-Reality-Technologien und -Anwendungen finden diese auch Einzug in das Automobil. Bei Augmented-Reality (AR) handelt es sich um die Anreicherung der realen Welt durch virtuelle Elemente, die im dreidimensionalen Raum ortskorrekt registriert beziehungsweise verortet sind und eine Echtzeitinteraktion erlauben. Eine mögliche technische Realisierung um den Fahrerarbeitsplatz entsprechend mit perspektivisch korrekten virtuellen Augmentierungen anzureichern bietet das Head-Up-Display (HUD).

Gerade bei Head-Up-Displays entsteht die virtuelle Anzeige durch eine im Armaturenbrett integrierte bildgebende Einheit, wie beispielsweise ein TFT-Display. Dieses Bild wird über mehrere Spiegel in Richtung der Windschutzscheibe gelenkt, wo das Licht in das Auge des Fahrers reflektiert wird. Der Fahrer nimmt dieses Bild als eine virtuelle Anzeige im Sichtfeld wahr. Bei der Auslegung solcher Systeme wird der Bereich, in den das Licht reflektiert wird räumlich begrenzt, um eine höhere Helligkeit durch geringere Lichtstreuung zu erzielen. Dieser Bereich wird als "EyeBox" bezeichnet, da sich das Blickfeld des Fahrers in diesem Bereich befinden muss, um eine Wahrnehmung des virtuellen Bildes zu ermöglichen.

Die DE 2018 204 254 A1 offenbart beispielsweise ein Verfahren zur Berechnung einer Einblendung von Zusatzinformationen für eine Anzeige auf einer Anzeigeeinheit die ein Head-Up-Display umfasst. Bei den eingeblendeten Zusatzfunktionen kann es sich beispielsweise auch um die Markierung eines vorausfahrenden Fahrzeugs handeln.

Augmented Reality Head-Up Displays (AR HUDs) visualisieren Informationen im direkten Sichtfeld des Fahrers/der Fahrerin. Dies ermöglicht einerseits die Kommunikation von fahrrelevanten Informationen, ohne dass dafür eine Blickabwendung erforderlich wäre. Andererseits können diese Anzeigen, nicht zuletzt aufgrund des relativ schmalen Blickfelds, auch stören, da sie per Definition im fahrrelevanten Sichtfeld angezeigt werden. Daher gilt es, die Dauer von Anzeigen zu minimieren. Idealerweise sollte die Information genau dann angezeigt werden, wenn diese unmittelbar für den Fahrer/die Fahrerin relevant ist.

Die DE 10 2011 007 329 A1 offenbart beispielsweise ein Verfahren zum Betreiben eines Kraftfahrzeugs, wobei dem Fahrer des Fahrzeugs Zusatzinformationen über ein Head-Up-Display eingeblendet werden. Dabei ist vorgesehen, dass im Zusammenhang mit einer adaptiven Geschwindigkeitsregelungseinrichtung die Geschwindigkeit in Abhängigkeit des vorausfahrenden Fahrzeugs geregelt wird. Dabei wird das vorausfahrende Fahrzeug durch die Anzeigeeinrichtung markiert, wenn die Gefahr besteht, dass die Geschwindigkeitsregelanlage von falschen Werten zur Regelung der Geschwindigkeit ausgeht.

Ein Nachteil des vorgenannten Standes der Technik besteht darin, dass dem Fahrer möglicherweise nicht klar ist, warum eine Fehlersituation entsteht, sodass nicht eindeutig bestimmt werden kann, warum und wie der Fahrer in diesem Fall reagieren muss.

Der Erfindung liegt daher die Aufgabe zugrunde, ein Verfahren, eine Vorrichtung sowie ein Fahrzeug anzugeben, bei denen der Anzeigebereich einer Anzeigeeinrichtung möglichst effizient genutzt wird, sodass dem Fahrer eines Fahrzeugs eine übersichtliche Darstellung der benötigten Informationen ermöglicht und er nicht unnötig abgelenkt wird und dem Fahrer zusätzlich ermöglicht wird, Gefahrensituationen korrekt zu erfassen.

Diese Aufgabe ist bei der vorliegenden Erfindung durch die Merkmale des Kennzeichnungsteils des Patentanspruchs 1 zunächst dadurch gelöst, dass das erste Fahrzeug markiert wird, wenn ein vordefinierter Geschwindigkeitsgradient zwischen dem Fahrzeug und dem ersten Fahrzeug überschritten oder unterschritten wird.

Beim Anzeigebereich der Anzeigeeinrichtung kann es sich um ein Display im Mittelbereich oder im Cockpitbereich, beispielsweise im Kombiinstrument des Fahrzeugs, handeln. Alternativ oder zusätzlich kann der Anzeigebereich der Anzeigeeinrichtung als Head-Up-Display ausgestaltet sein. Unter Head-Up-Display ist ein Anzeigebereich zu verstehen, bei dem der Fahrer seine Kopfhaltung beziehungsweise Blickrichtung beibehalten kann, weil die Informationen in sein Sichtfeld, beispielsweise auf die Windschutzscheibe des Fahrzeugs, projiziert werden.

Der dargestellte dreidimensionale Raum kann vorzugsweise einen Bereich außerhalb des Fahrzeugs in Fahrtrichtung beschreiben. Bei einem Head-Up-Display ist der Anzeigebereich der Anzeigeeinrichtung beziehungsweise der dreidimensionale Raum gleichzusetzen mit dem Blick durch die Windschutzscheibe. Der dreidimensionale Raum ist dann folglich der Raum vor dem Fahrzeug im Blickfeld des Fahrers beziehungsweise des Beifahrers. Bei den entsprechend zum virtuellen Element berechneten dreidimensionalen Koordinaten kann es sich beispielsweise um kartesische Koordinaten handeln.

Entsprechend kann es sich bei dem im Anzeigebereich dargestellten ersten Fahrzeug um ein Fahrzeug handeln, das sich in der Umgebung des Fahrzeugs befindet und entweder virtuell im Anzeigebereich der Anzeigeeinrichtung dargestellt wird oder, beispielsweise beim Head-Up-Display, das tatsächliche erste Fahrzeug ist, das sich in der Umgebung des Fahrzeugs befindet und im Anzeigebereich der Anzeigeeinrichtung dargestellt wird. In der Umgebung kann bedeuten, dass das erste Fahrzeug sich vor, neben oder hinter dem Fahrzeug befindet.

Die zur Berechnung der Koordinaten benötigten Datenquellen können unterschiedlicher Art sein. Bevorzugt handelt es sich bei diesen Datenquellen um Fahrzeugdaten beziehungsweise Navigationsdaten, die durch die Positionierungssensorik des Fahrzeugs, wie zum Beispiel GPS, Drehratensensoren oder Kameras aufgenommen werden.

Bei dem virtuellen Element kann es sich um verschiedene Bildelemente und/oder Schaltflächen handeln, die im Anzeigebereich der Anzeigeeinrichtung dargestellt werden. Die virtuellen Elemente können eine Verbindung zu Fahrzeugdaten aufweisen und/oder abhängig von den Fahreigenschaften des Fahrzeugs sein. Die Daten können zum Beispiel aus vorhandenen Fahrassistenzsystemen stammen. Es ist aber auch denkbar, dass die dargestellten virtuellen Elemente irrelevant für die Fahreigenschaften des Fahrzeugs sind.

Die Markierung des ersten Fahrzeugs kann auf unterschiedliche Arten realisiert werden, die dazu geeignet sind, den Fahrer visuell darauf aufmerksam zu machen, dass das erste Fahrzeug erkannt wurde. Zusätzlich kann dem Fahrer auch akustisch und/oder haptisch, beispielsweise durch Vibration am Lenkrad, vermittelt werden, dass das erste Fahrzeug erkannt wurde.

Erfindungsgemäß ist vorgesehen, dass das erste Fahrzeug markiert wird, wenn ein vordefinierter Geschwindigkeitsgradient zwischen dem Fahrzeug und dem ersten Fahrzeug überschritten wird. Somit wird das erste Fahrzeug lediglich durch das virtuelle Element markiert, wenn es für den Fahrer des Fahrzeugs relevant ist. Der Geschwindigkeitsgradient beschreibt die momentane Änderung der Relativgeschwindigkeiten des Fahrzeugs und des ersten Fahrzeugs. Wenn sich der Geschwindigkeitsgradient ändert, kann dies bedeuten, dass das erste Fahrzeug abbremst, wodurch möglicherweise eine Kollisionsgefahr des Fahrzeugs mit dem ersten Fahrzeug bestehen kann. Daher wird dem Fahrer des Fahrzeugs signalisiert, dass eine Änderung des Geschwindigkeitsgradienten registriert wurde, indem das erste Fahrzeug durch das virtuelle Element markiert wird. Der Fahrer des Fahrzeugs kann dann entsprechend reagieren.

Für den Fall, dass die Markierung des ersten Fahrzeugs durch das virtuelle Element mit anderen Assistenzfunktionen verknüpft ist, beispielsweise mit einer adaptiven Geschwindigkeitsregelung1, wird dem Fahrer entsprechend suggeriert, dass beispielsweise ein Bremsvorgang des vorausfahrenden Fahrzeugs durch das System erkannt wurde.

Weitere bevorzugte Ausgestaltungen der Erfindung ergeben sich aus den übrigen, in den Unteransprüchen genannten Merkmalen.

Bei einer ersten Ausgestaltung der Erfindung ist vorgesehen, dass die dreidimensionalen Koordinaten des virtuellen Elements auf der Grundlage einer Abstandsmessung zum vorausfahrenden Fahrzeug als erstes Fahrzeug bestimmt werden. Auf diese Weise können Daten der sogenannten "Adaptive Cruise Control (ACC)" genutzt werden. Bei dieser Funktion können Nutzer zwischen beispielsweise fünf Stufen wählen, die jeweils in einem unterschiedlichen Abstand zum Vorderfahrzeug resultieren. So kann ein vorausfahrendes Fahrzeug gemäß dem Verfahren markiert werden, sobald es von der Adaptive Cruise Control erfasst wurde.

Auf diese Weise wird dem Fahrer des Fahrzeugs visuell mitgeteilt, dass ein vorausfahrendes Fahrzeug erkannt wurde. Der Fahrer des Fahrzeugs erhält folglich ein Feedback, dass die Abstandsmessung korrekt ausgeführt wird, wodurch das Vertrauen in die ansonsten nicht direkt erfassbare Technik gestärkt wird.

Alternativ oder zusätzlich kann bei einer weiteren Ausgestaltung des erfindungsgemäßen Verfahrens vorgesehen sein, dass die dreidimensionalen Koordinaten des virtuellen Elements auf Grundlage des zeitlichen Abstands zum vorausfahrenden Fahrzeug als erstes Fahrzeug bestimmt werden. Durch die Zeitlückenverstellung kann der Fahrer des Fahrzeugs zwischen beispielsweise fünf Stufen wählen, die jeweils in einem unterschiedlichen Abstand zum Vorderfahrzeug resultieren. Entsprechend der Bezeichnung Zeitlücke ist jede Stufe durch einen spezifischen zeitlichen Abstand zum Vorderfahrzeug definiert, wie beispielsweise 1 s. Aus der Ist-Geschwindigkeit sowie der Zeitlücke errechnet sich der zu haltende Abstand, welcher im Anzeigebereich der Anzeigeeinrichtung als kontaktanaloge Linie dargestellt werden kann. Denkbar sind dabei auch andere Darstellungen.

Bei einer besonders bevorzugten Ausgestaltung des erfindungsgemäßen Verfahrens ist vorgesehen, dass das vorausfahrende Fahrzeug als erstes Fahrzeug durch das virtuelle Element markiert wird, wenn es im Anzeigebereich der Anzeigeeinrichtung dargestellt wird. Dabei ist denkbar, dass das erste Fahrzeug markiert wird, wenn es im Anzeigebereich der Anzeigeeinrichtung sichtbar wird. Im Falle eines Head-Up-Displays bedeutet dies, dass sich das erste Fahrzeug von außerhalb der "Eye-Box" perspektivisch in den Bereich der "Eye-Box" hineinbewegt. Sobald dies der Fall ist, kann das erste Fahrzeug durch das virtuelle Element markiert werden, sodass dem Fahrer signalisiert wird, dass das erste Fahrzeug erkannt wurde.

Im Falle eines Anzeigebereichs, in dem ein Kamerabild dargestellt wird, kann das erste Fahrzeug entsprechend aus einem Bereich außerhalb des Sichtfeldes der Kamera in das Sichtfeld hineinbewegt und entsprechend dann durch das virtuelle Element markiert werden.

Um den Fahrer des Fahrzeugs nicht unnötig abzulenken, ist bei einer weiteren Ausgestaltung des erfindungsgemäßen Verfahrens vorgesehen, dass das erste Fahrzeug über eine vordefinierte Dauer markiert wird. Somit kann dem Fahrer des Fahrzeugs zunächst signalisiert werden, dass ein erstes Fahrzeug in der Nähe des Fahrzeugs registriert wurde. Nach einer angemessenen Zeit, nach der davon ausgegangen werden kann, dass der Fahrer die Markierung registriert hat, kann die Markierung dann wieder aufgehoben werden. Auf diese Weise bleibt der Anzeigebereich der Anzeigeeinrichtung für den Fahrer des Fahrzeugs übersichtlich.

Alternativ oder zusätzlich kann bei einer weiteren Ausgestaltung vorgesehen sein, dass das erste Fahrzeug markiert wird, wenn ein vordefinierter Unterschied der Relativgeschwindigkeiten des Fahrzeugs und des ersten Fahrzeugs registriert wird. Auf diese Weise wird das erste Fahrzeug lediglich durch das virtuelle Element markiert, wenn es für den Fahrer des Fahrzeugs relevant ist. Wenn der Unterschied der Relativgeschwindigkeiten des Fahrzeugs und des ersten Fahrzeugs zu groß ist, kann dies bedeuten, dass das Fahrzeug deutlich schneller ist, als das erste Fahrzeug. Wenn es sich bei dem ersten Fahrzeug um das vorausfahrende Fahrzeug handelt, kann dies bedeuten, dass möglicherweise eine Kollision bevorsteht, sollte die Geschwindigkeit des Fahrzeugs nicht reguliert werden. Der Fahrer des Fahrzeugs kann dann entsprechend reagieren.

Für den Fall, dass die Markierung des ersten Fahrzeugs durch das virtuelle Element mit anderen Assistenzfunktionen verknüpft ist, beispielsweise mit dem vorgenannten ACC-System, wird dem Fahrer entsprechend suggeriert, dass das vorausfahrende Fahrzeug durch das System erkannt wurde.

Gemäß einer weiteren Ausgestaltung kann vorgesehen sein, dass die Distanz zum vorausfahrenden Fahrzeug permanent erfasst wird. Die permanente Erfassung der Distanz trägt dazu bei, dass der Abstand zwischen dem vorausfahrenden ersten Fahrzeug und dem Fahrzeug kontrolliert werden kann.

Darüber hinaus kann bei einer weiteren Ausgestaltung vorgesehen sein, dass die Distanz zum vorausfahrenden Fahrzeug einmal pro Sekunde, bevorzugt alle 500 ms, besonders bevorzugt alle 250 ms ausgewertet wird. Durch die Auswertung kann beispielsweise der vorgenannte Geschwindigkeitsgradient und/oder die Relativgeschwindigkeiten des Fahrzeugs und des ersten Fahrzeugs beziehungsweise des vorausfahrenden Fahrzeugs ermittelt werden. Auf Grundlage dieser Auswertungen kann vom System entschieden werden, ob eine Markierung des Fahrzeugs durch das virtuelle Element im Anzeigebereich der Anzeigeeinrichtung erforderlich ist.

Bei einer weiteren Ausgestaltung des erfindungsgemäßen Verfahrens ist vorgesehen, dass das vorausfahrende Fahrzeug dauerhaft markiert wird. Durch eine dauerhafte Markierung wird dem Fahrer des Fahrzeugs permanent vermittelt, dass das vorausfahrende Fahrzeug erkannt wird und etwaige verknüpfte Assistenzsysteme entsprechend zuverlässig arbeiten. Wenn keine oder wenig weitere virtuelle Elemente im Anzeigebereich der Anzeigeeinrichtung angezeigt werden, kann diese Art der Darstellung sinnvoll sein.

Denkbar ist auch, dass unterschiedliche Einstellmöglichkeiten vorgesehen sind, bei denen beispielsweise lediglich die Markierung des ersten Fahrzeugs durch das virtuelle Element für den Fahrer sichtbar im Anzeigebereich der Anzeigeeinrichtung dargestellt wird. Durch Umschalten des möglichen Modus können dann andere, für den Fahrer relevante Elemente im Anzeigebereich der Anzeigeeinrichtung dargestellt werden. Auf diese Weise wird die Informationsflut im Anzeigebereich der Anzeigeeinrichtung minimiert. Der Fahrer wird somit nicht unnötig abgelenkt und kann sich auf das Fahren des Fahrzeugs konzentrieren.

Es sind unterschiedliche Möglichkeiten denkbar, durch die das erste Fahrzeug von dem virtuellen Element markiert werden kann. Bei einer Ausgestaltung des erfindungsgemäßen Verfahrens ist vorgesehen, dass das erste Fahrzeug durch das virtuelle Element umlaufend markiert wird. Unter einer umlaufenden Markierung kann zum Beispiel ein Einkreisen des ersten Fahrzeugs und/oder ein Umranden der Kontur des ersten Fahrzeugs verstanden werden. Dabei kann zusätzlich das erste Fahrzeug durch Aufhellungen hervorgehoben werden. Das virtuelle Element kann eine Farbe aufweisen, die im starken Kontrast zum dargestellten dreidimensionalen Raum steht, sodass es gut sichtbar ist. Denkbar ist auch, dass das virtuelle Element durch eine generelle Signalfarbe hervorgehoben wird.

Alternativ oder zusätzlich kann bei einer weiteren Ausgestaltung des erfindungsgemäßen Verfahrens vorgesehen sein, dass das virtuelle Element ein Orientierungsmerkmal aufweist und dass das Orientierungsmerkmal in Richtung des ersten Fahrzeugs orientiert ist. Mit dem Orientierungsmerkmal kann beispielsweise eine Pfeilspitze eines Richtungspfeils gemeint sein. Das Orientierungsmerkmal wird entsprechend so orientiert, dass es auf das erste Fahrzeug gerichtet ist.

Die zuvor genannte Aufgabe wird außerdem gelöst von einer vorgenannten Vorrichtung zur Darstellung eines virtuellen Elements mit mindestens einer Anzeigeeinrichtung mit mindestens einem Anzeigebereich, gemäß dem Kennzeichnungsteil des Patentanspruchs 12. Es ist vorgesehen, dass die Anzeigeeinrichtung dafür ausgelegt ist, ein erfindungsgemäßes Verfahren durchzuführen. Die obigen Ausführungen zum erfindungsgemäßen Verfahren gelten entsprechend auch für die erfindungsgemäße Vorrichtung.

Bei der Vorrichtung kann es sich beispielsweise um ein Navigationssystem handeln, das eine grafische Ausgabe von virtuellen Elementen gemäß dem erfindungsgemäßen Verfahren ermöglicht.

Vorzugsweise ist bei einer ersten Ausgestaltung der erfindungsgemäßen Vorrichtung vorgesehen, dass der Anzeigebereich der Anzeigeeinrichtung als Head-Up-Display (HUD) ausgestaltet ist.

Daneben wird die zuvor genannte Aufgabe gelöst von einem Fahrzeug, gemäß dem Kennzeichnungsteil des Patentanspruchs 14, wobei das Fahrzeug eine erfindungsgemäße Vorrichtung umfasst.

Die obigen Ausführungen zur erfindungsgemäßen Vorrichtung gelten entsprechend auch für das erfindungsgemäße Fahrzeug.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Ausführungsbeispiels eines erfindungsgemäßen Verfahrens zur Darstellung eines virtuellen Elements,
- Figur 2: eine schematische Darstellung eines weiteren Ausführungsbeispiels des erfindungsgemäßen Verfahrens und
- Figur 3: eine schematische Darstellung des Ablaufs eines Ausführungsbeispiels des erfindungsgemäßen Verfahrens.

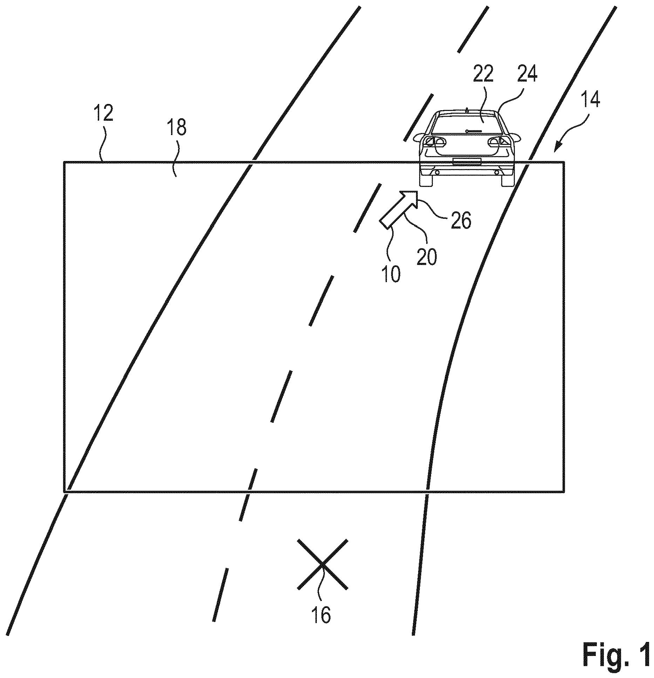

Figur 1 zeigt schematisch die Darstellung eines virtuellen Elements 10 im Anzeigebereich 12 einer Anzeigeeinrichtung 14. In dem Anzeigebereich 12 wird aus der Perspektive eines Fahrzeugs 16 ein dreidimensionaler Raum 18 dargestellt. Das virtuelle Element 10 wird durch eine zweidimensionale Abbildung 20 nach Möglichkeit perspektivisch korrekt im Anzeigebereich 12 dargestellt. Dazu werden auf Basis mindestens einer Datenquelle dreidimensionale Koordinaten für die Verortung des virtuellen Elements 10 bestimmt. Die dreidimensionalen Koordinaten sollen dabei angeben, wo genau die zweidimensionale Abbildung 20 verortet werden muss, damit ein möglichst realistischer Eindruck entsteht, dass die zweidimensionale Abbildung 20 kontaktanalog, also als Teil der Umgebung wahrgenommen wird.

In diesem Ausführungsbeispiel ist der Anzeigebereich 12 der Anzeigeeinrichtung 14 als Head-Up-Display ausgestaltet. Durch das Head-Up-Display kann der Fahrer des Fahrzeugs 16 seine Kopfhaltung beziehungsweise Blickrichtung beibehalten, weil die Informationen in sein Sichtfeld auf die Windschutzscheibe des Fahrzeugs projiziert werden. Der dargestellte dreidimensionale Raum 18 im Anzeigebereich 12 der Anzeigeeinrichtung 14 ist bei einem Head-Up-Display gleichzusetzen mit dem Blick durch die Windschutzscheibe. Der dreidimensionale Raum 18 ist folglich der Raum vor dem Fahrzeug 16 im Blickfeld des Fahrers.

In Figur 1 ist ersichtlich, dass ein erstes Fahrzeug 22 in dem Anzeigebereich 12 der Anzeigeeinrichtung 14 zumindest teilweise dargestellt wird. Das erste Fahrzeug 22 ist in diesem Fall das dem Fahrzeug 16 vorausfahrende Fahrzeug 24. Das erste Fahrzeug 22 ist perspektivisch so weit von dem Fahrzeug 16 entfernt, dass es im Anzeigebereich 12 der Anzeigeeinrichtung 14 so weit oben dargestellt wird, dass die Darstellung nur noch teilweise im Anzeigebereich 12 liegt.

Das virtuelle Element 10 ist in diesem Ausführungsbeispiel als Richtungspfeil mit einem Orientierungsmerkmal 26 in Form einer Pfeilspitze ausgestaltet. Der Richtungspfeil ist in Richtung des ersten Fahrzeugs 22 orientiert, sodass der Pfeil auf das erste Fahrzeug 22 zeigt. Bei diesem Ausführungsbeispiel des Verfahrens wird das virtuelle Element 10 dazu genutzt, ein vorausfahrendes Fahrzeug 24 zu markieren, sobald es im Anzeigebereich 12 der Anzeigeeinrichtung 14 zumindest teilweise dargestellt werden kann.

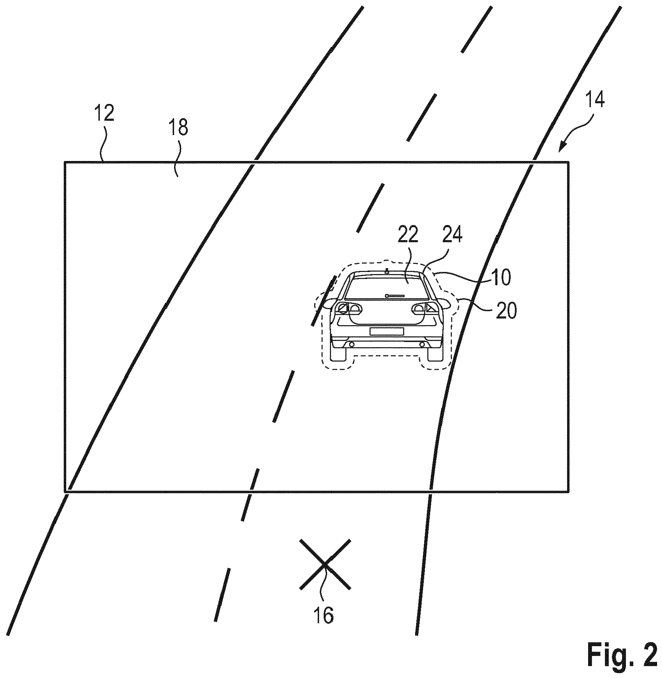

In Figur 2 ist ein weiteres Ausführungsbeispiel des erfindungsgemäßen Verfahrens dargestellt. Analog zu Figur 1 wird ein erstes Fahrzeug 22 beziehungsweise ein vorausfahrendes Fahrzeug 24 im Anzeigebereich 12 der Anzeigeeinrichtung 14 dargestellt. Im Gegensatz zu Figur 1 wird das erste Fahrzeug 22 vollständig im Anzeigebereich 12 der Anzeigeeinrichtung 14 dargestellt. Das virtuelle Element 10 wird in diesem Ausführungsbeispiel als Umrandung des ersten Fahrzeugs 22 dargestellt, sodass das erste Fahrzeug 22 aktiv markiert werden kann. Auf diese Weise wird dem Fahrer des Fahrzeugs verdeutlicht, dass ein vorausfahrendes Fahrzeug 24 erkannt wurde.

Vorliegend wird der Abstand zwischen dem Fahrzeug 16 und dem vorausfahrenden Fahrzeug 24 permanent gemessen. In einem Zeitintervall von etwa 500 ms werden die gemessenen Daten ausgewertet. Zusätzlich ist das sogenannte "Adaptive Cruise Control (ACC)" Assistenzsystem mit der Markierung des vorausfahrenden Fahrzeugs 24 durch das virtuelle Element 10 verknüpft. Bei der Adaptive Cruise Control ist es für den Fahrer möglich, vorgegebene Abstände zum vorausfahrenden Fahrzeug 24 einzuhalten. Dabei kann entweder der entsprechende Abstand zum vorausfahrenden Fahrzeug 24 berücksichtigt werden und/oder der zeitliche Abstand. Durch die Zeitlückenverstellung kann der Fahrer des Fahrzeugs 16 zwischen beispielsweise fünf Stufen wählen, die jeweils in einem unterschiedlichen Abstand zum vorausfahrenden Fahrzeug 24 resultieren. Entsprechend der Bezeichnung Zeitlücke ist jede Stufe durch einen spezifischen zeitlichen Abstand zum vorausfahrenden Fahrzeug 24 definiert, wie beispielsweise 1 s. Aus der Ist-Geschwindigkeit sowie der Zeitlücke errechnet sich der zu haltende Abstand, welcher im Anzeigebereich der Anzeigeeinrichtung als kontaktanaloge Linie dargestellt werden kann. Denkbar sind dabei auch andere Darstellungen.

In Kombination mit der Markierung des vorausfahrenden Fahrzeugs 24 wird der Adaptive Cruise Control eine Visualisierung des erfassten vorausfahrenden Fahrzeugs 24 ermöglicht. Der Fahrer des Fahrzeugs 16 kann durch die Markierung des vorausfahrenden Fahrzeugs 24 in Kombination mit der Adaptive Cruise Control nachvollziehen, dass durch das Assistenzsystem ein vorausfahrendes Fahrzeug erkannt wird.

Zusätzlich hat der Fahrer des Fahrzeugs 16 bei diesem Ausführungsbeispiel mehrere Optionen, inwieweit eine Markierung des vorausfahrenden Fahrzeugs 24 erfolgen soll. Zum einen kann die Markierung des Fahrzeugs 16 durch das virtuelle Element 10 erfolgen, sobald ein vorausfahrendes Fahrzeug 24 durch Sensoren, die unter anderem auch die Adaptive Cruise Control nutzt, erkannt wird und zumindest teilweise im Anzeigebereich 12 der Anzeigeeinrichtung 14 dargestellt wird. Zudem ist es möglich, dass die Markierung des vorausfahrenden Fahrzeugs 24 lediglich erfolgt, wenn ein vordefinierter Unterschied zur Relativgeschwindigkeit zwischen dem Fahrzeug 16 und dem ersten Fahrzeug 22 registriert wird.

Eine weitere Option besteht darin, dass das vorausfahrende Fahrzeug 24 nur dann durch das virtuelle Element 10 markiert wird, wenn ein vordefinierter Geschwindigkeitsgradient zwischen dem Fahrzeug 16 und dem vorausfahrenden Fahrzeug 24 überschritten wird. Somit wird das vorausfahrende Fahrzeug 24 lediglich durch das virtuelle Element 10 markiert, wenn es für den Fahrer des Fahrzeugs 16 relevant ist. Der Geschwindigkeitsgradient beschreibt die momentane Änderung der Relativgeschwindigkeiten des Fahrzeugs 16 und des vorausfahrenden Fahrzeugs 24. Wenn sich der Geschwindigkeitsgradient ändert, kann dies bedeuten, dass das vorausfahrende Fahrzeug 24 abbremst, wodurch möglicherweise eine Kollisionsgefahr des Fahrzeugs 16 mit dem vorausfahrenden Fahrzeug 24 bestehen kann. Daher wird dem Fahrer des Fahrzeugs 16 signalisiert, dass eine Änderung des Geschwindigkeitsgradienten registriert wurde, indem das vorausfahrende Fahrzeug 24 durch das virtuelle Element 10 markiert wird.

Aufgrund der Verknüpfung mit der Adaptive Cruise Control wird das Fahrzeug 16 entsprechend selbstständig abgebremst, um den vorgegebenen Abstand des Fahrzeugs 16 zum vorausfahrenden Fahrzeug 24 weiterhin einzuhalten. Dem Fahrer wird durch die Markierung des vorausfahrenden Fahrzeugs 24 im Anzeigebereich 12 der Anzeigeeinrichtung 14 signalisiert, dass die Adaptive Cruise Control den Bremsvorgang des vorausfahrenden Fahrzeugs 24 korrekt registriert hat und entsprechende Gegenmaßnahmen einleitet. Auf diese Weise wird dem Fahrer des Fahrzeugs 16 ein Gefühl der Sicherheit vermittelt.

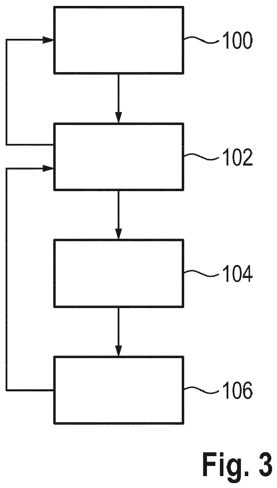

Figur 3 zeigt die schematische Darstellung der schrittweisen Durchführung eines Ausführungsbeispiels eines erfindungsgemäßen Verfahrens. In Schritt 100 wird mittels Sensoren oder anderen verfügbaren Daten, beispielsweise GPS Daten oder Car2x beziehungsweise Car2Car Verbindungen, der Abstand zwischen dem Fahrzeug 16 und dem vorausfahrenden Fahrzeug 24 erfasst. In Schritt 102 wird der erfasste Abstand und entsprechende Änderungen des Abstandes zwischen dem Fahrzeug 16 und dem vorausfahrenden Fahrzeug 24 ausgewertet. Wenn bei der Auswertung festgestellt wird, dass keine Änderung, beispielsweise des vorgenannten Geschwindigkeitsgradienten erfolgt, wird die Schleife fortgesetzt und weiterhin der Abstand in Schritt 100 zwischen dem Fahrzeug 16 und dem vorausfahrenden Fahrzeug 24 gemessen.

Wenn eine Änderung des Geschwindigkeitsgradienten ermittelt wird, wird in Schritt 104 überprüft, ob das vorausfahrende Fahrzeug im Anzeigebereich 12 der Anzeigeeinrichtung 14 dargestellt wird. Ist dies der Fall, wird das im Anzeigebereich 12 der Anzeigeeinrichtung 14 dargestellte vorausfahrende Fahrzeug in Schritt 106 durch ein virtuelles Element 10 markiert, sodass dem Fahrer des Fahrzeugs 16 signalisiert wird, dass eine erhöhte Achtsamkeit notwendig ist.

Das vorausfahrende Fahrzeug 24 wird so lange markiert, wie die entsprechende Voraussetzung für die Markierung durch das virtuelle Element 10 erfüllt ist. Sobald beispielsweise keine Änderung des Geschwindigkeitsgradienten mehr erfolgt und die potentielle Gefahrensituation vorüber ist, kann die Markierung des vorausfahrenden Fahrzeugs 24 durch das virtuelle Element 10 aufgehoben werden, sodass der Fahrer des Fahrzeugs 16 nicht unnötigerweise durch den Anzeigebereich 12 der Anzeigeeinrichtung 14 abgelenkt wird.

### Bezugszeichenliste

- 10: virtuelles Element
- 12: Anzeigebereich
- 14: Anzeigeeinrichtung
- 16: Fahrzeug
- 18: dreidimensionaler Raum
- 20: zweidimensionale Abbildung
- 22: erstes Fahrzeug
- 24: vorausfahrendes Fahrzeug
- 26: Orientierungsmerkmal

## Patentansprüche

1. Verfahren zur Darstellung mindestens eines virtuellen Elements (10) in einem Anzeigebereich (12) mindestens einer Anzeigeeinrichtung (14) eines Fahrzeugs (16), wobei im Anzeigebereich (12) der Anzeigeeinrichtung (14) ein dreidimensionaler Raum (18) dargestellt wird, wobei auf Basis mindestens einer Datenquelle dreidimensionale Koordinaten im dargestellten dreidimensionalen Raum (18) für die Verortung mindestens eines virtuellen Elements (10) bestimmt werden, wobei das mindestens eine virtuelle Element (10) als zweidimensionale Abbildung (20) in den dreidimensionalen Raum (18), der im Anzeigebereich (12) der Anzeigeeinrichtung (14) dargestellt wird, transformiert wird, wobei durch das virtuelle Element (10) mindestens ein erstes Fahrzeug (22) markiert wird, das im Anzeigebereich (12) der Anzeigeeinrichtung (14) dargestellt wird, **dadurch gekennzeichnet, dass** das erste Fahrzeug (22) markiert wird, wenn ein vordefinierter Geschwindigkeitsgradient zwischen dem Fahrzeug (16) und dem ersten Fahrzeug (22) überschritten oder unterschritten wird.

2. Verfahren nach Anspruch 1, **dadurch gekennzeichnet, dass** die dreidimensionalen Koordinaten des virtuellen Elements (10) auf der Grundlage einer Abstandsmessung zum vorausfahrenden Fahrzeug (24) als erstes Fahrzeug (22) bestimmt werden.

3. Verfahren nach Anspruch 1 oder 2, **dadurch gekennzeichnet, dass** die dreidimensionalen Koordinaten des virtuellen Elements (10) auf Grundlage des zeitlichen Abstands zum vorausfahrenden Fahrzeug (24) als erstes Fahrzeug (22) bestimmt werden.

4. Verfahren nach einem der Ansprüche 1 bis 3, **dadurch gekennzeichnet, dass** das vorausfahrende Fahrzeug (24) als erstes Fahrzeug (22) durch das virtuelle Element (10) markiert wird, sobald es im Anzeigebereich (12) der Anzeigeeinrichtung (14) darstellbar ist.

5. Verfahren nach einem der Ansprüche 1 bis 4, **dadurch gekennzeichnet, dass** das erste Fahrzeug (22) über eine vordefinierte Dauer markiert wird.

6. Verfahren nach einem der Ansprüche 1 bis 5, **dadurch gekennzeichnet, dass** das erste Fahrzeug (22) markiert wird, wenn ein vordefinierter Unterschied zur Relativgeschwindigkeit zwischen dem Fahrzeug (16) und dem ersten Fahrzeug (22) registriert wird.

7. Verfahren nach einem der Ansprüche 1 bis 6, **dadurch gekennzeichnet, dass** die Distanz zum vorausfahrenden Fahrzeug (24) als erstes Fahrzeug (22) permanent erfasst wird.

8. Verfahren nach Anspruch 7, **dadurch gekennzeichnet, dass** die Distanz zum vorausfahrenden Fahrzeug (22) als erstes Fahrzeug (24) einmal pro Sekunde, bevorzugt alle 500 ms, besonders bevorzugt alle 250 ms ausgewertet wird.

9. Verfahren nach einem der Ansprüche 1 bis 8, **dadurch gekennzeichnet, dass** das vorausfahrende Fahrzeug (24) als erstes Fahrzeug (22) dauerhaft markiert wird.

10. Verfahren nach einem der Ansprüche 1 bis 9, **dadurch gekennzeichnet, dass** das erste Fahrzeug (22) durch das virtuelle Element umkreist wird.

11. Verfahren nach einem der Ansprüche 1 bis 10, **dadurch gekennzeichnet, dass** das virtuelle Element ein Orientierungsmerkmal (26) aufweist und dass das Orientierungsmerkmal (26) in Richtung des ersten Fahrzeugs (22) orientiert ist.

12. Vorrichtung zur Darstellung mindestens eines virtuellen Elements (10), mit mindestens einer Anzeigeeinrichtung (14) mit mindestens einem Anzeigebereich (12), **dadurch gekennzeichnet, dass** die Anzeigeeinrichtung (12) dafür ausgelegt ist, ein Verfahren nach einem der Ansprüche 1 bis 11 durchzuführen.

13. Vorrichtung nach Anspruch 12 **dadurch gekennzeichnet, dass** der Anzeigebereich (12) der Anzeigeeinrichtung (14) als Head-Up-Display (HUD) ausgestaltet ist.

14. Fahrzeug mit einer Vorrichtung zur Darstellung mindestens eines virtuellen Elements (10), **dadurch gekennzeichnet, dass** die Vorrichtung gemäß Anspruch 12 oder 13 ausgestaltet ist.
